# EUROPEAN PATENT SPECIFICATION

(11) **EP 4 545 391 B1**
(45) Date of publication and mention of the grant of the patent: **18.02.2026**
(21) Application number: 23205693.7
(22) Date of filing: 25.10.2023
(51) Int. Cl.: B62K 5/02, B62K 7/04, B60P 1/48

(54) **CARGO BIKE**
FRACHTFAHRRAD
BICYCLETTE CARGO

(43) Date of publication of application: 30.04.2025
(73) Proprietor: VOLVO TRUCK CORPORATION, 405 08 Göteborg (SE)
(72) Inventor: COURTENS, Fabrice, 69300 Caluire et cuire (FR)
(74) Representative: Germain Maureau

(56) References cited:
- WO-A1-2018/194503
- WO-A1-2023/170432
- DE-A1- 102019 133 724
- FR-A1- 2 977 229

## Description

### TECHNICAL FIELD

The disclosure relates generally to the distribution of containers by a vehicle and, more particularly, by a cargo bike. In particular aspects, the disclosure relates to a cargo bike allowing a distribution of a pallet. Although the disclosure may be described with respect to a cargo bike, the disclosure is not restricted to any particular vehicle.

### BACKGROUND

The invention applies to distribution of items ordered by users, in particular urban users living in a city. The items are usually collected at a warehouse outside the city before being delivered by distribution vehicles from different companies to the user individually or via a retail outlet, such as a supermarket or shop.

For this purpose, wooden pallets are known for their strength and resistance, which allows them to support heavy moving loads. Pallets are thus an ideal logistics accessory for the storage and transport of a wide variety of products.

Last-mile delivery has developed rapidly in recent years. One of the main problems is congestion due to the number of light and heavy vehicles delivering goods and other city vehicles, but the worst problem is the time spent unloading, usually in poor parking conditions, having to open the rear doors of a truck, deploy a tail lift and use a pallet truck.

Given the various constraints of urban delivery and the difficulties of recharging electric vehicles, cargo bikes seem to offer a sustainable solution for absorbing the growth in last-mile deliveries due in particular to the expansion in e-commerce. Cargo bikes, especially electrically-assisted cargo bikes, are developing rapidly, initially in cycle logistics start-ups specializing in urban deliveries, but also increasingly with traditional haulage companies and vehicle rental companies.

An electrically assisted cargo bike has a number of advantages. It emits no CO₂ or particulates, so it is not subject to access restrictions in city centers. It can carry up to 300 kg of load, including temperature-controlled goods, thanks to a range of equipment including luggage racks and tow bars.

It is manoeuvrable enough to access any road, delivering to the nearest recipient even in streets or alleyways that are off-limits or inaccessible to trucks. The integrated, low-power electric motor helps the delivery to bear the weight of the device, but does not require long charging times for the batteries, which can even be recharged when pedaling or braking.

The main problem is therefore loading, transporting and unloading goods on pallets when trucks are not allowed or when it is more convenient to use bicycles. However, using a conventional cargo bike does not allow customers to load and unload pallets easily.

WO 2023/170432 A1 discloses the preamble of claim 1.

### SUMMARY

The invention aims at solving the above problems.

According to a first aspect of the disclosure, a cargo bike, with a longitudinal orientation, comprises:
- a driver area, which is positioned in front of the cargo bike in regard to the direction of travel of the cargo bike,
- a pallet receiving device including a frame around which two longitudinal load arms for supporting a pallet are rotatably mounted and a transverse retaining rod which is intended to support a rear end of the longitudinal load arms and to act as a longitudinal stop for the pallet,
- a pick-up area intended to accommodate said pallet receiving device, the pick-up area being positioned to the rear of the driver area, the pallet receiving device being operated by a tilting device that is configured to tilt the pallet receiving device longitudinally between a first end position in which the pallet receiving device is located in the pick-up area and a second end position in which the pallet receiving device is located to the rear of the pick-up area, and
- a system for fastening the pallet receiving device to the tilting device.

A first aspect of the disclosure may seek to provide a cargo bike which allows pallets to be loaded and unloaded easily, without the need to use a forklift.

In some examples, the two longitudinal load arms are rotatably mounted at the front of the pallet receiving device.

In some examples, the frame of the pallet receiving device comprises a rear transverse part and two longitudinal side parts.

In some examples, the transverse retaining rod is mounted on each longitudinal side part via a rod support which is secured to said longitudinal side part using a pin.

In some examples, the pallet receiving device comprises a rear transverse rod mounted on the frame and around which the load arms are mounted to rotate.

In some examples, the rear end of the longitudinal load arms includes a beveled portion provided with a recess in the shape of a portion of a cylinder for receiving the transverse retaining rod.

In some examples, the tilting device comprises two pivoting arms located laterally on either side of the cargo bike and mounted so as to rotate relative to a frame of the cargo bike, each pivoting arm being driven in rotation by an actuator.

In some examples, the pivoting arms are rotatably mounted at the rear of the pick-up area and said actuator is a hydraulic cylinder comprising a cylinder tube in which moves a piston connected to a rod, the cylinder tube being mounted so as to rotate relative to the frame of the cargo bike, the rod being mounted so as to rotate relative to the pivoting arm driven in rotation by said actuator. Alternatively, an electric cylinder could be used.

In some examples, each pivoting arm includes a lower part and an upper part, the lower part extending between a lower end which is mounted to rotate relative to the frame of the cargo bike, and an upper end which is mounted to rotate relative to one end of the rod of the hydraulic cylinder, the upper part extending between a lower end which coincides with the upper end of the lower part and an upper end located above the pallet receiving device, wherein the lower part has a first inclination relative to the frame of the cargo bike.

In some examples, the upper part has a second inclination relative to the frame of the cargo bike that is higher than the first inclination.

In some examples, the fastening system comprises two sets of two connecting elements, namely a first set of two connecting elements fastened to a first longitudinal side part of the frame of the pallet receiving device and to an upper transverse rod connecting the two pivoting arms and a second set of two connecting elements fastened to a second longitudinal side part of the frame of the pallet receiving device and to the upper transverse rod connecting the two pivoting arms.

In some examples, each connecting element comprises a chain.

In some examples, the cargo bike also comprises retractable feet positioned at the rear of the pick-up area. The retractable feet can be operated electrically, manually or hydraulically.

In some examples, the driver area comprises a seat unit, a pedal unit, a steering unit, a roof element over at least the driver area, a connected dashboard and a battery box.

In some examples, the cargo bike is a three-wheeler with one front wheel and two rear wheels.

According to a second aspect of the disclosure, a not claimed method for loading/unloading a pallet implements the cargo bike described above.

In some examples, the method comprises:
- tilting the pallet receiving device accommodating a the pallet longitudinally between a position in which the pallet receiving device is located in the pick-up area and a position in which the pallet receiving device is located to the rear of the pick-up area, and/or
- tilting the pallet receiving device accommodating a pallet longitudinally between a position in which the pallet receiving device is located to the rear of the pick-up area and a position in which the pallet receiving device is located in the pick-up area.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is a perspective view of a cargo bike of the invention according to one example,
**FIG. 2** is a first detailed view of the cargo bike of **FIG. 1****,**
**FIG. 3** is a second detailed view of the cargo bike of **FIG. 1****,**
**FIG. 4** is a perspective view of a cargo bike accommodating a pallet,
**FIG. 5** is a side view of a cargo bike accommodating a pallet,
**FIG. 6** is a rear view of a cargo bike accommodating a pallet,
**FIG. 7** is a side view of the cargo bike, during a first step of unloading a pallet receiving container,
**FIG. 8** is a perspective view of the cargo bike of **FIG. 7****,**
**FIG. 9** is a side view of the cargo bike, during a second step of unloading a pallet receiving container,
**FIG. 10** is a perspective view of the cargo bike of **FIG. 9****,**
**FIG. 11** is a side view of the cargo bike, during a third step of unloading a pallet receiving container,
**FIG. 12** is a perspective view of the cargo bike of **FIG. 11****,** and
**FIG. 13** is a side view of the cargo bike of **FIG. 11** with a pallet.

### DETAILED DESCRIPTION

Aspects set forth below represent the necessary information to enable those skilled in the art to practice the disclosure.

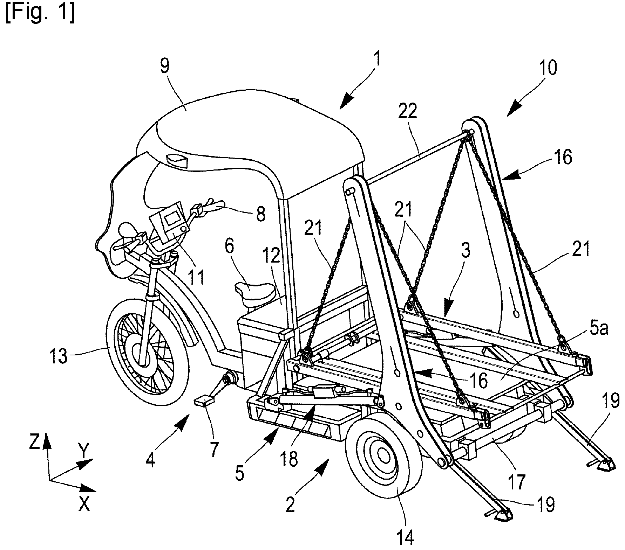

**FIG. 1** is a perspective view of a cargo bike 1 of the invention according to one example.

The cargo bike 1 extends generally in a longitudinal direction X. The spatial representation of the cargo bike 1 is supplemented by a transverse direction Y and a vertical direction Z. The cargo bike 1 can be driven using muscle power and/or an electric drive. Cargo bike 1 includes pick-up area 2 in which one pallet receiving device 3 is positioned, the pallet receiving device 3 being operated by a tilting device 10. The cargo bike 1 also advantageously comprises retractable feet 19 positioned at the rear of the pick-up area 2. The retractable feet 19 help maintain balance of the cargo bike 1 when the pallet receiving device 3 is tipped backwards by the tilting device 10.

Moreover, the cargo bike 1 includes a driver area 4 which is positioned in front of the pick-up area 2 in relation to the driving direction (i.e. the longitudinal direction) X of the cargo bike 1. A frame 5 supports the driver area 4 and the pick-up area 2.

In the driver area 4 there is a seat unit 6, a pedal unit 7, a steering unit 8, a roof element 9 over at least the driver area 4, a connected dashboard 11 and a battery box 12.

The cargo bike 1 can typically be a three-wheeler with one front wheel 13 and two rear wheels 14.

The tilting device 10 is intended to pivot the container 3 between a loading position and an unloading position. In the loading position, the pallet placed on the receiving device 3 is positioned on a floor 5a mounted on the frame 5, for example a wooden floor, whereas in the unloading position the pallet receiving device 3 is tipped on the ground 15, at the rear of the cargo bike 1.

The tilting 10 device comprises two pivoting arms 16 mounted so as to rotate around a transverse rod 17 located at the rear of the frame. The pivoting arms 16 thus cause a longitudinal tilting of the pallet receiving device 3 towards the rear of the cargo bike 1. A pivoting arm 16 is positioned laterally on each side of the container 3. Each arm 16 can be a double arm comprising two identical plates connected by transverse rods.

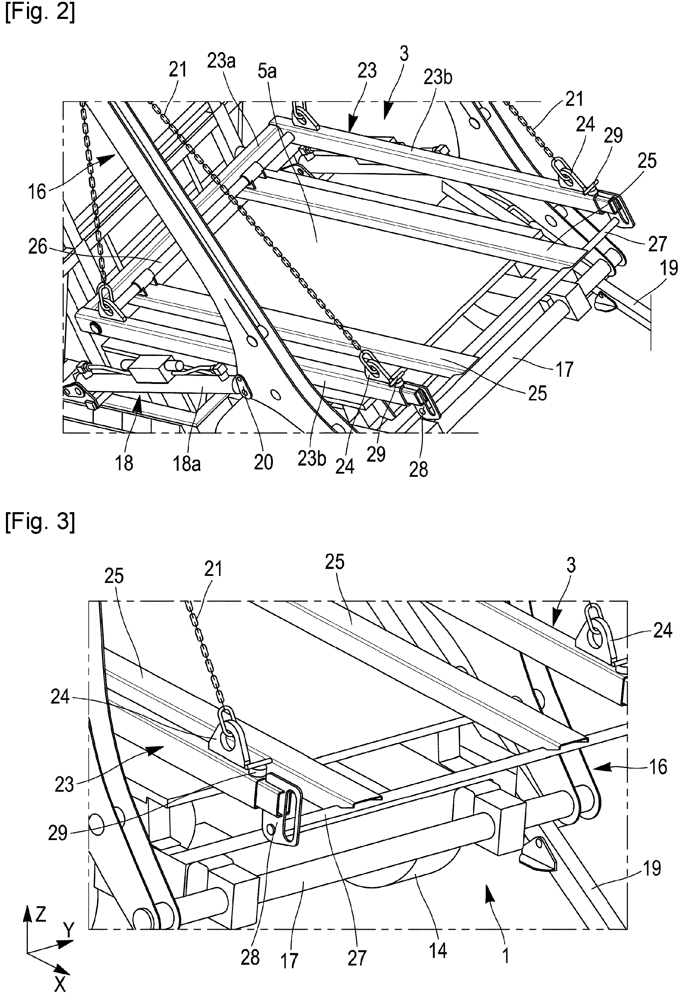

**FIG. 2** is a first detailed view of the cargo bike 1 of **FIG. 1****,** whereas **FIG. 3** is a second detailed view of the cargo bike 1 of **FIG. 1****.**

Each arm 16 is driven in rotation by an actuator 18 such as an electric cylinder or, as shown, a hydraulic cylinder. Each cylinder 18 is mounted on the frame at the rear of the driver area 4, notably at the junction between the driver area 4 and the pick-up area 2. The cylinder 18 is in particular mounted so as to rotate around a transversal axle of the frame 5. Each cylinder 18 comprises a cylinder tube 18a in which moves a piston connected to a rod 18b. The rod 18b is mounted so as to rotate around a transverse axle 20 of the pivoting arm 16.

Each pivoting arm 16 includes two parts, namely a lower part and an upper part, each part having a different inclination relative to the frame 5. The lower part extends between a lower end which is mounted to rotate relative to the frame 5, around the transverse rod 17, and an upper end around which is mounted to rotate one end of the rod 18b of the hydraulic cylinder 18. The upper part extends between a lower end which coincides with the upper end of the lower part and an upper end located above the pallet receiving device 3. The lower part has a first inclination relative to the floor 5a of the frame 5. The upper part has a second inclination relative to the floor 5a that is higher than the first inclination.

The pallet receiving device 3 comprises a frame 23 around which a fork is rotatably mounted. The frame 23 includes a rear transverse part 23a and two longitudinal side parts 23b.

The fork includes a pair of load arms 25 (tins) intended to support a pallet. The load arms 25 are spaced apart laterally so that they can enter the spaces between the skids of the pallet.

A front end of the load arms 25 is mounted to rotate around a rear transverse rod 26 placed at the front of the rear part 23a of the frame 23 and between the two longitudinal side parts 23b. The transverse rod 26 can rotate freely relative to the frame 23.

A transverse retaining rod 27 is intended to support a rear end of the load arms 25 and to act as a longitudinal stop for the pallet. The retaining rod 27 also serves to connect the side parts 23b of the frame 23 and thus serves to ensure the solidity of the frame 23 by avoiding its deformation. The retaining rod 27 is mounted on each side part 23b of the frame 23 via a rod support 28 which is secured to the side part 23b using a pin 29.

The rear end of the load arms 25 may comprise a beveled portion provided with a recess in the shape of a portion of a cylinder. This makes it easier to support the rear end of the lad arms 25 on the retaining rod 27.

A system 21 for fastening the pallet receiving device 3 to the tilting device 10 is used. The fastening system 21 comprises two sets of two connecting elements. A first set of two connecting elements 21 is fastened to an upper transverse rod 22 connecting the two pivoting arms 16 and to a first longitudinal side part 23b of the frame 23, via for example a rear ring 24 and a front ring 24 of the first longitudinal side part 23b. In the same manner, a second set of two connecting elements 21 is fastened to the upper transverse rod 22 and to a second longitudinal side part 23b of the frame 23, via for example a rear ring 24 and a front ring 24 of the second longitudinal side part 23b.

Each connecting element 21 is advantageously a chain.

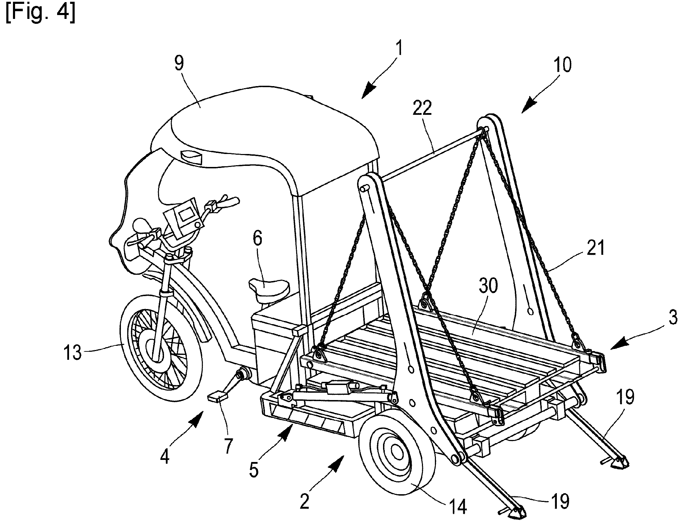

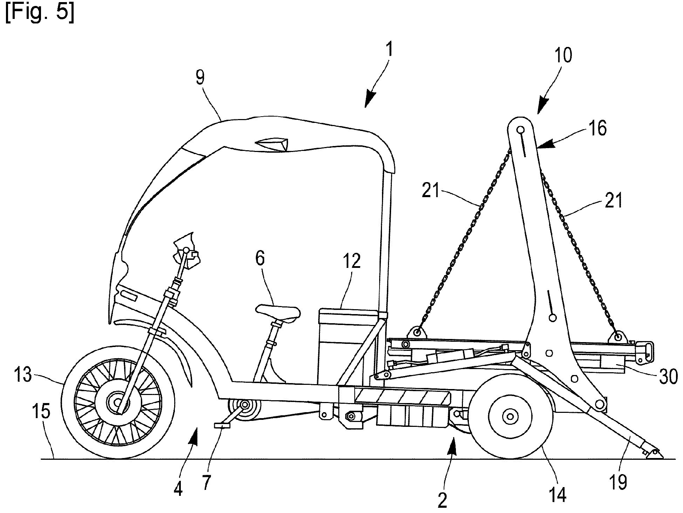

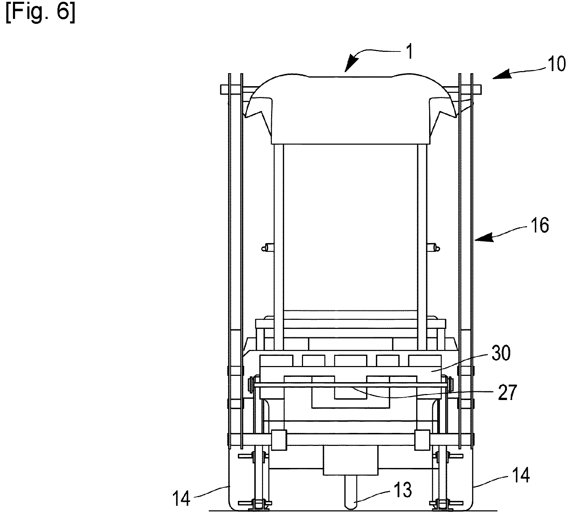

**FIG. 4** is a perspective view of a cargo bike 1 accommodating a pallet 30, **FIG. 5** is a side view of a cargo bike 1 accommodating a pallet 30, and **FIG. 6** is a rear view of a cargo bike 1 accommodating a pallet 30.

A pallet 30 is conventionally used for handling a plurality or group of smaller packages, containers. The pallet 30 has a top board or plate, typically of wood or like material, supported by a plurality of parallel skids which of course space the board above the ground or floor to allow for the insertion of the load arms 25 beneath the load via the spaces between the skids. By any means, the several packages, boxes etc. are previously stacked on the pallet and it remains only to handle the loaded pallet rather than the large number of smaller packages.

When placed on the pallet receiving device 3, the pallet 30 is held laterally by the side parts 23b of the frame 23, at the rear by the rear part 23a of the frame 23 and at the front by the retaining rod 27.

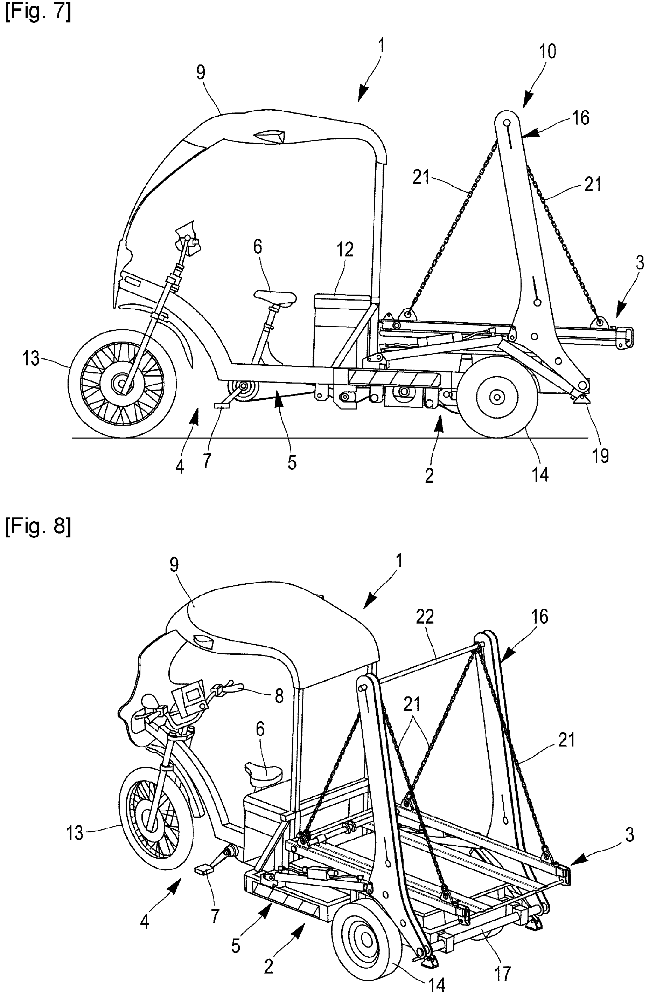

**FIG. 7** is a side view of the cargo bike 1, during a first step of unloading the pallet receiving device 3, whereas **FIG. 8** is a perspective view of the cargo bike 1 of **FIG. 7****.**

At the start of unloading, the pallet 30 is positioned in the pick-up area 4, in the pallet receiving device 3. Retractable feet 19 can be deployed to rest on the ground 15 and thus help maintain balance of the cargo bike 1 when the pallet receiving device 3 is tipped backwards by the tilting device 10.

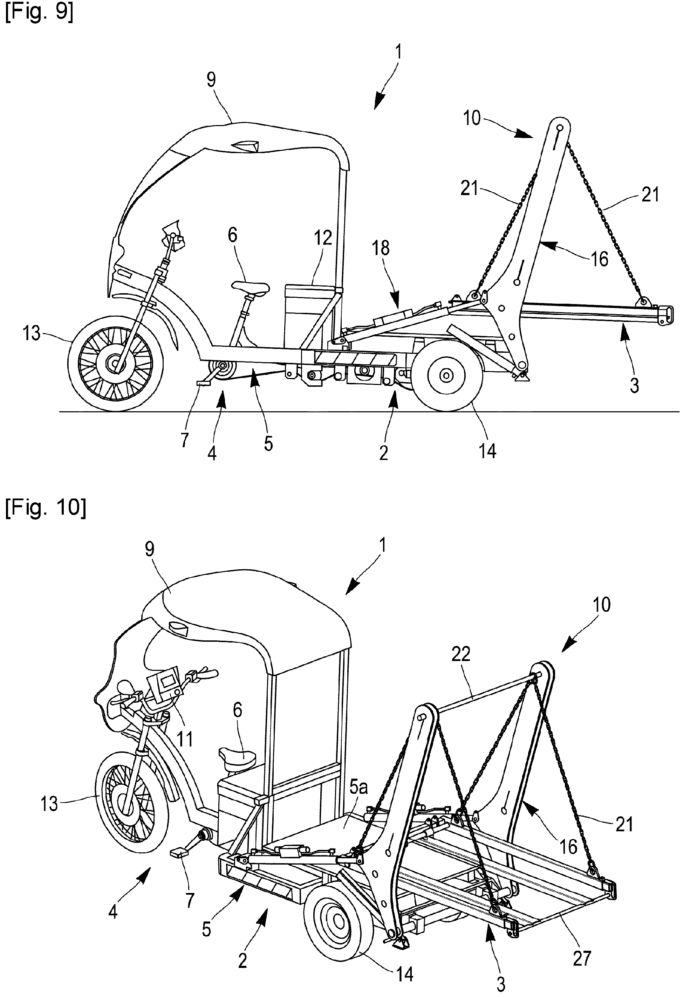

**FIG. 9** is a side view of the cargo bike 1, during a second step of unloading the pallet receiving device 3, whereas **FIG. 10** is a perspective view of the cargo bike 1 of **FIG. 9****.**

During this stage, the pallet receiving device 3 is tipped backwards by the tilting device 10. The actuator 18 rotates the pivoting arms 16 about the axle 17 by actuating the rod 18b of the hydraulic cylinder 18. The pallet receiving device 3 is suspended by the fastening system 21. As the fastening system 21 can pivot freely relative to the tilting device 10, the pallet receiving device 3 is held in a horizontal position during tilting. During the tilt, each hydraulic cylinder 18 rotates around frame 5 and each pivoting arm 16 rotates around the rod 18b of the hydraulic cylinder 18.

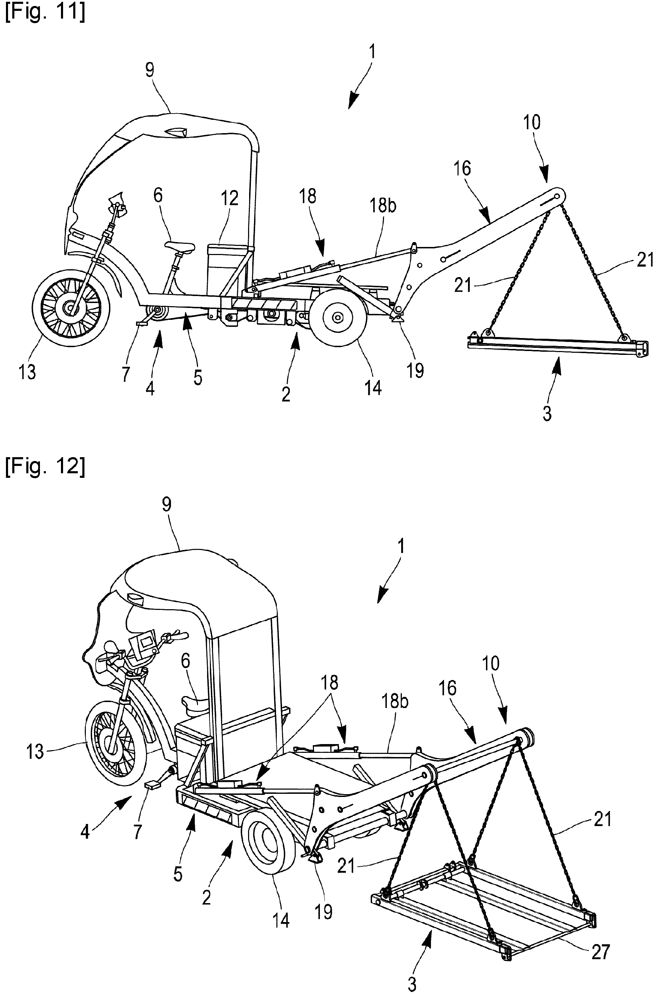

**FIG. 11** is a side view of the cargo bike, during a third step of unloading the pallet receiving device 3, whereas **FIG. 12** is a perspective view of the cargo bike 1 of **FIG. 11****.**

At the end of tipping, the pallet receiving device 3 is positioned in such a manner that the pallet touches the ground 15. The pallet can then be collected from the pallet receiving device 3.

In the same way, the pallet receiving device 3 can be tipped from its unloaded position to its loaded position by operating the hydraulic cylinder 18 in the opposite direction, the retraction of the rod 18b of the hydraulic cylinder 18 causing the pallet receiving device 3 to tilt forward until the pallet receiving device 3 is positioned in the pick-up area 2.

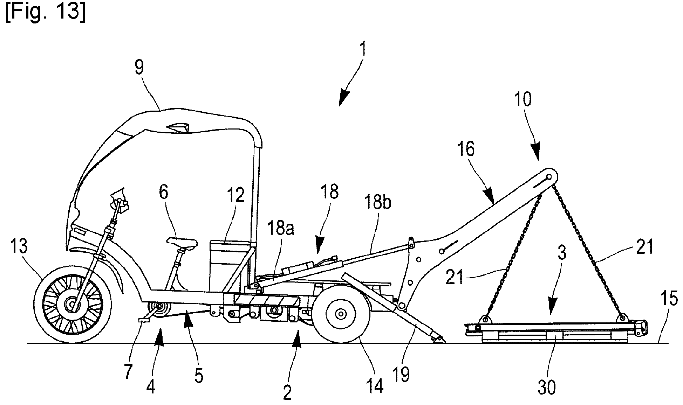

**FIG. 13** is a side view of the cargo bike of **FIG. 11** with a pallet 30.

An example of loading the pallet 30 onto the cargo bike 1 can be as follows: the pallet receiving device 3 is placed on the ground 15. The pallet 30 is then straddled on the load arms 25 of the pallet receiving device 3 and the retaining rod 27 is mounted on the frame 23. Finally, the pallet receiving device 3 is fastened to the tilting device 10 using the fastening system 21 and the pallet receiving device 3 is tilted to the loading position.

Unloading the pallet 30 can be done by tilting the pallet receiving device 3 to the rear of the cargo bike 1 and by removing the retaining rod 27 from the frame 23. Simply moving the cargo bike 1 forward will allow the user full access to the pallet 30.

The terminology used herein is for the purpose of describing particular aspects only and is not intended to be limiting of the disclosure. As used herein, the singular forms "a, " "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure In the drawings and specification, there have been disclosed aspects for purposes of illustration only and not for purposes of limitation, the scope of the inventive concepts being set forth in the following claims.

## Claims

1. A cargo bike (1), with a longitudinal orientation (X), comprising:
- a driver area (4), which is positioned in front of the cargo bike (1) in regard to the direction of travel of the cargo bike (1),
- a pallet receiving device (3) including a frame (23) around which two longitudinal load arms (25) for supporting a pallet (30) are rotatably mounted and a transverse retaining rod (27) which is intended to support a rear end of the longitudinal load arms (25) and to act as a longitudinal stop for the pallet,
- a pick-up area (2) intended to accommodate said pallet receiving device (3), the pick-up area (2) being positioned to the rear of the driver area (4), **characterized in that** the pallet receiving device (3) being operated by a tilting device (10) that is configured to tilt the pallet receiving device (3) longitudinally between a first end position in which the pallet receiving device (3) is located in the pick-up area (2) and a second end position in which the pallet receiving device (3) is located to the rear of the pick-up area (2), and a system (21) for fastening the pallet receiving device (3) to the tilting device (10).

2. The cargo bike (1) of claim 1, wherein the two longitudinal load arms (25) are rotatably mounted at the front of the pallet receiving device (3).

3. The cargo bike (1) of claim 1 or 2, wherein the frame (23) of the pallet receiving device (3) comprises a rear transverse part (23a) and two longitudinal side parts (23b).

4. The cargo bike (1) of claim 3, wherein the transverse retaining rod (27) is mounted on each longitudinal side part (23b) via a rod support 28 which is secured to said longitudinal side part (23b) using a pin (29).

5. The cargo bike (1) of any claims 1-4, wherein the pallet receiving device (3) comprises a rear transverse rod (26) mounted on the frame (23) and around which the load arms (25) are mounted to rotate.

6. The cargo bike (1) of any claims 1-5, wherein the rear end of the longitudinal load arms (25) includes a beveled portion provided with a recess in the shape of a portion of a cylinder for receiving the transverse retaining rod (27).

7. The cargo bike (1) of any claims 1-6, wherein the tilting device (10) comprises two pivoting arms (16) located laterally on either side of the cargo bike (1) and mounted so as to rotate relative to a frame (5) of the cargo bike (1), each pivoting arm (16) being driven in rotation by an actuator (18).

8. The cargo bike (1) of claim 7, wherein the pivoting arms (16) are rotatably mounted at the rear of the pick-up area (2) and wherein said actuator (18) is a hydraulic cylinder comprising a cylinder tube (18a) in which moves a piston connected to a rod (18b), the cylinder tube (18a) being mounted so as to rotate relative to the frame (5) of the cargo bike (1), the rod (18b) being mounted so as to rotate relative to the pivoting arm (16) driven in rotation by said actuator (18).

9. The cargo bike (1) of claim 8, wherein each pivoting arm (16) includes a lower part and an upper part, the lower part extending between a lower end which is mounted to rotate relative to the frame (5) of the cargo bike (1), and an upper end which is mounted to rotate relative to one end of the rod (18b) of the hydraulic cylinder (18), the upper part extending between a lower end which coincides with the upper end of the lower part and an upper end located above the pallet receiving device (3), wherein the lower part has a first inclination relative to the frame (5) of the cargo bike (1).

10. The cargo bike (1) of claim 9, wherein the upper part has a second inclination relative to the frame (5) of the cargo bike (1) that is higher than the first inclination.

11. The cargo bike (1) of any claims 7-10, wherein the fastening system (21) comprises two sets of two connecting elements (21), namely a first set of two connecting elements (21) fastened to a first longitudinal side part (23b) of the frame (23) of the pallet receiving device (3) and to an upper transverse rod (22) connecting the two pivoting arms (16) and a second set of two connecting elements (21) fastened to a second longitudinal side part (23b) of the frame (23) of the pallet receiving device (3) and to the upper transverse rod (22) connecting the two pivoting arms (16).

12. The cargo bike (1) of claim 11, wherein each connecting element comprises a chain (21).

13. The cargo bike (1) of any claims 1-12, wherein the cargo bike (1) also comprises retractable feet (19) positioned at the rear of the pick-up area (2).

14. The cargo bike (1) of any claims 1-13, wherein the driver area (4) comprises a seat unit (6), a pedal unit (7), a steering unit (8), a roof element (9) over at least the driver area (4), a connected dashboard (11) and a battery box (12).

15. The cargo bike (1) of any claims 1-14, wherein the cargo bike (1) is a three-wheeler with one front wheel (13) and two rear wheels (14).

## Patentansprüche

1. Lastenrad (1) mit Längsausrichtung (X), das Folgendes umfasst:
- einen Fahrerbereich (4), der bezüglich der Fahrtrichtung des Lastenrads (1) vor dem Lastenrad (1) positioniert ist,
- eine Palettenaufnahmevorrichtung (3), die einen Rahmen (23) enthält, um den zwei drehbar gelagerte Längslastarme (25) zum Abstützen einer Palette (30) montiert sind, sowie eine Querhaltestange (27), die dazu dient, das hintere Ende der Längslastarme (25) abzustützen und als Längsanschlag für die Palette zu fungieren,
- einen Abholbereich (2), der für die Palettenaufnahmevorrichtung (3) vorgesehen ist, wobei der Abholbereich (2) hinter dem Fahrerbereich (4) positioniert ist, **dadurch gekennzeichnet, dass**
die Palettenaufnahmevorrichtung (3) durch eine Kippvorrichtung (10) betätigt wird, die dazu eingerichtet ist, die Palettenaufnahmevorrichtung (3) längs zwischen einer ersten Endposition, in der sich die Palettenaufnahmevorrichtung (3) in dem Abholbereich (2) befindet, und einer zweiten Endposition, in der sich die Palettenaufnahmevorrichtung (3) hinten an dem Abholbereich (2) befindet, zu neigen, und
ein System (21) zum Befestigen der Palettenaufnahmevorrichtung (3) an der Kippvorrichtung (10).

2. Lastenrad (1) nach Anspruch 1, bei dem die beiden Längslastarme (25) drehbar an der Vorderseite der Palettenaufnahmevorrichtung (3) montiert sind.

3. Lastenrad (1) nach Anspruch 1 oder 2, wobei der Rahmen (23) der Palettenaufnahmevorrichtung (3) ein hinteres Querteil (23a) und zwei Längsseitenteile (23b) umfasst.

4. Lastenrad (1) nach Anspruch 3, wobei die Querhaltestange (27) an jedem Längsseitenteil (23b) über eine Stangenstütze 28 montiert ist, die mit einem Stift (29) an dem Längsseitenteil (23b) gesichert ist.

5. Lastenrad (1) nach einem der Ansprüche 1 bis 4, wobei die Palettenaufnahmevorrichtung (3) eine hintere Querstange (26) umfasst, die an dem Rahmen (23) montiert ist und um die die Lastarme (25) drehbar montiert sind.

6. Lastenrad (1) nach einem der Ansprüche 1 bis 5, wobei das hintere Ende der Längslastarme (25) einen abgeschrägten Abschnitt enthält, der mit einer Aussparung in Form eines Zylinderausschnitts zum Aufnehmen der Querhaltestange (27) versehen ist.

7. Lastenrad (1) nach einem der Ansprüche 1 bis 6, wobei die Kippvorrichtung (10) zwei seitlich an beiden Seiten des Lastenrads (1) angeordnete Schwenkarme (16) umfasst, die relativ zu einem Rahmen (5) des Lastenrads (1) drehbar montiert sind, wobei jeder Schwenkarm (16) von einem Aktuator (18) drehangetrieben wird.

8. Lastenrad (1) nach Anspruch 7, wobei die Schwenkarme (16) drehbar an der Rückseite des Abholbereichs (2) montiert sind und wobei der Aktuator (18) ein Hydraulikzylinder ist, der ein Zylinderrohr (18a) umfasst, in dem sich ein mit einer Stange (18b) verbundener Kolben bewegt, wobei das Zylinderrohr (18a) so montiert ist, dass es sich relativ zu dem Rahmen (5) des Lastenrads (1) dreht, während die Stange (18b) so montiert ist, dass sie sich relativ zu dem Schwenkarm (16) dreht, der von dem Aktuator (18) drehangetrieben wird.

9. Lastenrad (1) nach Anspruch 8, wobei jeder Schwenkarm (16) einen unteren Teil und einen oberen Teil enthält, wobei sich der untere Teil zwischen einem unteren Ende, das relativ zu dem Rahmen (5) des Lastenrads (1) drehbar montiert ist, und einem oberen Ende, das relativ zu einem Ende der Stange (18b) des Hydraulikzylinders (18) drehbar montiert ist, erstreckt, wobei sich der obere Teil zwischen einem unteren Ende, das mit dem oberen Ende des unteren Teils übereinstimmt, und einem oberen Ende erstreckt, das sich oberhalb der Palettenaufnahmevorrichtung (3) befindet, wobei der untere Teil eine erste Neigung relativ zu dem Rahmen (5) des Lastenrads (1) aufweist.

10. Lastenrad (1) nach Anspruch 9, wobei der obere Teil eine zweite Neigung relativ zu dem Rahmen (5) des Lastenrads (1) aufweist, die größer ist als die erste Neigung.

11. Lastenrad (1) nach einem der Ansprüche 7 bis 10, wobei das System (21) zum Befestigen aus zwei Sätzen von jeweils zwei Verbindungselementen (21) besteht, nämlich einem ersten Satz von zwei Verbindungselementen (21), die an einem ersten Längsseitenteil (23b) des Rahmens (23) der Palettenaufnahmevorrichtung (3) und an einer oberen Querstange (22) befestigt sind, die die beiden Schwenkarme (16) verbindet, sowie einem zweiten Satz von zwei Verbindungselementen (21), die an einem zweiten Längsseitenteil (23b) des Rahmens (23) der Palettenaufnahmevorrichtung (3) und an der oberen Querstange (22) befestigt sind, die die beiden Schwenkarme (16) verbindet.

12. Lastenrad (1) nach Anspruch 11, wobei jedes Verbindungselement eine Kette (21) umfasst.

13. Lastenrad (1) nach einem der Ansprüche 1 bis 12, wobei das Lastenrad (1) auch einziehbare Füße (19) umfasst, die hinten in dem Abholbereich (2) positioniert sind.

14. Lastenrad (1) nach einem der Ansprüche 1 bis 13, wobei der Fahrerbereich (4) eine Sitzeinheit (6), eine Pedaleinheit (7), eine Lenkeinheit (8), ein Dachelement (9) über mindestens dem Fahrerbereich (4), ein verbundenes Armaturenbrett (11) und einen Batteriekasten (12) umfasst.

15. Lastenrad (1) nach einem der Ansprüche 1 bis 14, wobei das Lastenrad (1) ein Dreirad mit einem Vorderrad (13) und zwei Hinterrädern (14) ist.

## Revendications

1. Vélo cargo (1), à orientation longitudinale (X), comprenant :
- une zone de conducteur (4), qui est positionnée à l'avant du vélo cargo (1) par rapport au sens de marche du vélo cargo (1),
- un dispositif de réception de palettes (3) comprenant un cadre (23) autour duquel sont montés de manière rotative deux bras de charge longitudinaux (25) pour supporter une palette (30) et une tige de retenue transversale (27) qui est destinée à supporter une extrémité arrière des bras de charge longitudinaux (25) et à servir de butée longitudinale pour la palette,
- une zone de chargement (2) destinée à accueillir ledit dispositif de réception de palettes (3), la zone de chargement (2) étant positionnée à l'arrière de la zone de conducteur (4), **caractérisé en ce que**
le dispositif de réception de palettes (3) est actionné par un dispositif d'inclinaison (10) qui est configuré pour incliner le dispositif de réception de palettes (3) longitudinalement entre une première position d'extrémité dans laquelle le dispositif de réception de palettes (3) est situé dans la zone de chargement (2) et une seconde position d'extrémité dans laquelle le dispositif de réception de palettes (3) est situé à l'arrière de la zone de chargement (2), et
un système (21) pour fixer le dispositif de réception de palettes (3) au dispositif d'inclinaison (10).

2. Vélo cargo (1) de la revendication 1, dans lequel les deux bras de charge longitudinaux (25) sont montés de manière rotative à l'avant du dispositif de réception de palettes (3).

3. Vélo cargo (1) de la revendication 1 ou 2, dans lequel le cadre (23) du dispositif de réception de palettes (3) comprend une partie transversale arrière (23a) et deux parties latérales longitudinales (23b).

4. Vélo cargo (1) de la revendication 3, dans lequel la tige de retenue transversale (27) est montée sur chaque partie latérale longitudinale (23b) par l'intermédiaire d'un support de tige 28 qui est fixé à ladite partie latérale longitudinale (23b) à l'aide d'une goupille (29).

5. Vélo cargo (1) de l'une des revendications 1 à 4, dans lequel le dispositif de réception de palettes (3) comprend une tige transversale arrière (26) montée sur le cadre (23) et autour de laquelle les bras de charge (25) sont montés pour tourner.

6. Vélo cargo (1) de l'une des revendications 1 à 5, dans lequel l'extrémité arrière des bras de charge longitudinaux (25) comprend une partie biseautée munie d'un évidement en forme de partie d'un cylindre pour recevoir la tige de retenue transversale (27).

7. Vélo cargo (1) de l'une des revendications 1 à 6, dans lequel le dispositif d'inclinaison (10) comprend deux bras pivotants (16) situés latéralement de part et d'autre du vélo cargo (1) et montés de manière à pivoter par rapport à un cadre (5) du vélo cargo (1), chaque bras pivotant (16) étant entraîné en rotation par un actionneur (18).

8. Vélo cargo (1) de la revendication 7, dans lequel les bras pivotants (16) sont montés de manière rotative à l'arrière de la zone de chargement (2) et dans lequel ledit actionneur (18) est un vérin hydraulique comprenant un tube cylindrique (18a) dans lequel se déplace un piston relié à une tige (18b), le tube cylindrique (18a) étant monté de manière à tourner par rapport au cadre (5) du vélo cargo (1), la tige (18b) étant montée de manière à tourner par rapport au bras pivotant (16) entraîné en rotation par ledit actionneur (18).

9. Vélo cargo (1) de la revendication 8, dans lequel chaque bras pivotant (16) comprend une partie inférieure et une partie supérieure, la partie inférieure s'étendant entre une extrémité inférieure qui est montée de manière à tourner par rapport au cadre (5) du vélo cargo (1), et une extrémité supérieure qui est montée de manière à tourner par rapport à une extrémité de la tige (18b) du vérin hydraulique (18), la partie supérieure s'étendant entre une extrémité inférieure qui coïncide avec l'extrémité supérieure de la partie inférieure et une extrémité supérieure située au-dessus du dispositif de réception de palettes (3), dans lequel la partie inférieure présente une première inclinaison par rapport au cadre (5) du vélo cargo (1).

10. Vélo cargo (1) de la revendication 9, dans lequel la partie supérieure présente une seconde inclinaison par rapport au cadre (5) du vélo cargo (1), qui est supérieure à la première inclinaison.

11. Vélo cargo (1) de l'une des revendications 7 à 10, dans lequel le système de fixation (21) comprend deux ensembles de deux éléments de liaison (21), à savoir un premier ensemble de deux éléments de liaison (21) fixé à une première partie latérale longitudinale (23b) du cadre (23) du dispositif de réception de palettes (3) et à une tige transversale supérieure (22) reliant les deux bras pivotants (16), et un second ensemble de deux éléments de liaison (21) fixé à une seconde partie latérale longitudinale (23b) du cadre (23) du dispositif de réception de palettes (3) et à la tige transversale supérieure (22) reliant les deux bras pivotants (16).

12. Vélo cargo (1) de la revendication 11, dans lequel chaque élément de liaison comprend une chaîne (21).

13. Vélo cargo (1) de l'une des revendications 1 à 12, dans lequel le vélo cargo (1) comprend également des pieds rétractables (19) positionnés à l'arrière de la zone de chargement (2).

14. Vélo cargo (1) de l'une des revendications 1 à 13, dans lequel la zone de conducteur (4) comprend une unité de siège (6), une unité de pédale (7), une unité de direction (8), un élément de toit (9) sur au moins la zone de conducteur (4), un tableau de bord connecté (11) et un boîtier de batterie (12).

15. Vélo cargo (1) de l'une des revendications 1 à 14, dans lequel le vélo cargo (1) est un tricycle à une roue avant (13) et deux roues arrière (14).
